# EUROPÄISCHE PATENTSCHRIFT

(11) **EP 1 127 937 B1**
(45) Veröffentlichungstag und Bekanntmachung des Hinweises auf die Patenterteilung: **29.12.2004**
(21) Anmeldenummer: 01810147.7
(22) Anmeldetag: 13.02.2001
(51) Int. Cl.: C09K 21/02, C08K 13/02

(54) **Additivmischung zur Erhöhung der Brandfestigkeit von Kunstoff-Formkörpern und Kunststoff-Formkörper**
Additive mixture for the increase of the flame resistance of plastic molded bodies and plastic molded bodies
Combinaison d'additifs pour améliorer la résistance au feu de corps moulé en matière plastique et corps moulé en matière plastique

(30) Priorität: 22.02.2000 DE 10007977
(43) Veröffentlichungstag der Anmeldung: 29.08.2001
(73) Patentinhaber: HILTI Aktiengesellschaft, 9494 Schaan (LI)
(72) Erfinder: Münzenberger, Herbert, 65191 Wiesbaden (DE); Lieberth, Wolfgang, 86916 Kaufering (DE); Heimpel, Franz, 86444 Affing (DE); Tiefensee, Gisela, 40225 Düsseldorf (DE)
(74) Vertreter: Wildi, Roland

(56) Entgegenhaltungen:
- EP-A- 0 832 735
- GB-A- 1 133 957

## Beschreibung

Die vorliegende Erfindung betrifft eine Additivmischung gemäß Anspruch 1 und deren Verwendung zur Erhöhung der Formbeständigkeit von Kunststoff-Formkörpern im Brandfall, diese Additivmischung enthaltende Kunststoff-Formkörper und ein Zweikomponentensystem zur ihrer Herstellung.

Es ist bekannt, daß Kunststoffe und insbesondere Kunststoff-Formkörper im Brandfall einer erheblichen Formveränderung unterliegen, weil sie schmelzen und sich dabei verformen oder aber durch Temperatur- und Flammeneinwirkung abgetragen werden. Dies ist besonders problematisch im Fall von Kunststoff-Formkörpern und insbesondere Kunststoffschaum-Formkörpern, die als Brandschutzmittel zur Abschottung von Durchbrüchen in Wänden, Decken und Böden, Kabeldurchführungen, Rohrdurchführungen und dergleichen eingesetzt werden, namentlich bei vor Ort ausgebrachten und in den abzuschottenden Öffnungen aufgeschäumten Brandschutzschäumen.

Es ist zwar bekannt, daß man zur Erhöhung der Feuerwiderstandsdauer solcher Kunststoff-Formkörper eine Reihe von Additiven zusetzen kann, so Flamminhibitoren und Flammschutzmittel zur Verbesserung der Brandfestigkeit, Ablationsfüllstoffe, die im Brandfall unter Wasserabspaltung und Energieverbrauch abblättern, verglasende oder keramisierende Füllstoffe, wie Borate, Glasfritten oder Natriumsilikat, verharzende und carbonatisierende Systeme oder auch intumeszierende Systeme, das heißt Systeme, die im Brandfall eine starke Vergrößerung des Volumens des Formkörpers bewirken, so daß die gegen den Feuerdurchschlag zu schützende Öffnung länger den erhöhten Temperaturen und der Flammeneinwirkung zu widerstehen vermag. Solche intumeszierenden Materialien sind beispielsweise Blähgraphit oder intumeszierende Systeme auf der Grundlage von Säurebildnern, Kohlenstoff liefernden Verbindungen, Gasbildnern und Harzbindemitteln, welche intumeszierenden Materialien und Systeme im Brandfall unter der Hitzeeinwirkung eine starke Volumenvergrößerung erfahren, so daß die Abschottung länger erhalten bleibt.

Die üblicherweise zur Stabilisierung von Intumeszenzkrusten verwendeten Füllstoffe und Additive, wie Borate, Metalloxide, Carbonate, Silikate, Phosphate und dergleichen, bewirken die Verfestigung der Aschekruste nach unterschiedlichen Mechanismen. So bewirken Borate und Phosphate eine Verglasung und dienen als Bindemittel, beeinflussen andererseits jedoch die Depolymerisation der Kunststoffmatrix. Füllstoffe, wie Carbonate, Silikate und dergleichen wirken als Verstärkung für die Intumeszenzkruste. Metalloxide, wie Eisenoxid oder Titandioxid reagieren mit Phosphor unter Bildung von keramisierend wirkenden Phosphaten, während Aluminium- und Magnesiumhydroxide durch Wasserabspaltung das Brandverhalten des Bindemittels verbessern.

Bei sämtlichen vorbekannten Systemen verbrennt, zersetzt oder schmilzt jedoch die Kunststoffmatrix unter der Temperatur- und Flammeneinwirkung. Auch die Additive und Zusätze verändern entsprechend ihres Wirkungsmechanlsmus ihren Zustand. Weiterhin wird eine etwa entstandene Intumeszenzkruste ständig durch Verbrennen, Erosion, Schmelzen, Zersetzung und dergleichen abgetragen, so daß der Kunststoff-Formkörper in Abhängigkeit von der Schichtdicke und der Dichte mehr oder weniger schnell verbraucht wird. Damit ist im Brandfall stets eine Veränderung der Form des Kunststoff-Formkörpers verbunden, so daß bislang keine Kunststoff-Formkörper bekannt sind, die unter Brandeinwirkung ihre ursprüngliche, geometrische Form über längere Zeit beibehalten.

Die Aufgabe der vorliegenden Erfindung besteht nun darin, eine Additivmischung bereitzustellen, mit der es gelingt, die Formbeständigkeit von Kunststoff-Formkörpern im Brandfall deutlich zu verbessern, Kunststoff-Formkörper dieser Art bereitzustellen, sowie ein Zwei-Komponentensystem zur Herstellung solcher Kunststoff-Formkörper anzugeben.

Es hat sich nun überraschenderweise gezeigt, daß wenn man die Kunststoffmatrix des Kunststoff-Formkörpers mit einer Additivmischung, die mindestens einen Säurebildner, mindestens eine Kohlenstoff liefernde Verbindung und mindestens ein teilchenförmiges Metall enthält, versetzt, die Formbeständigkeit des Kunststoff-Formkörpers deutlich verbessert werden kann, indem er sich im Brandfall ohne wesentliche Änderung der geometrischen Form in eine anorganische, harte, steinartige, feuerbestandige Masse umwandelt.

Gegenstand der Erfindung ist daher die Additivmischung gemäß Anspruch 1. Die Unteransprüche betreffen bevorzugte Ausführungsformen dieser Additivmischung, einen diese Additivmischung enthaltenden Kunststoff-Formkörper und ein Zweikomponentensystem zur Herstellung dieses Kunststoff-Formkörpers vor Ort sowie bevorzugte Ausführungsformen dieser Erfindungsgegenstände.

Die Erfindung betrifft somit insbesondere eine Additivmischung zur Erhöhung der Formbeständigkeit von Kunststoff-Formkörpern im Brandfall, die gekennzeichnet ist durch einen Gehalt an mindestens einem Säurebildner, mindestens einer Kohlenstoff liefernden Verbindung und mindestens einem teilchenförmigen Metall.

Gemäß einer bevorzugten Ausführungsform enthält die Additivmischung 10 bis 90 Gew.-%, vorzugsweise 40 bis 70 Gew.-% des Säurebildners, 5 bis 45 Gew.-%, vorzugsweise 15 bis 30 Gew.-% der Kohlenstoff liefernden Verbindung und 5 bis 45 Gew.-%, vorzugsweise 15 bis 30 Gew.-% des teilchenförmigen Metalls.

Vorzugsweise enthält die Additivmischung als Säurebildner ein Salz oder einen Ester einer anorganischen, nicht flüchtigen Säure ausgewählt aus Schwefelsäure, Phosphorsäure und Borsäure. Besonders bevorzugte Säurebildner sind Ammoniumphosphat, Ammoniumpolyphosphat, Diaminphosphate, Phosphorsäureester mit einwertigen oder mehrwertigen Alkoholen, insbesondere Polyolen, wie Pentaerythrit, insbesondere Trichloethylphosphat, Tris(2-chlorisopropyl)-phosphat, Triphenylphosphat, Tris(2-chlorethyl)-phosphat, Pentaerythritphosphate, Phosporsäure-Teilester oder -mischester mit einwertigen und/oder mehrwertigen niedrigmolekularen Alkoholen, Melaminphosphate, insbesondere Monomelaminorthophosphat. Dimelaminorthophosphat, Dimelaminpyrophosphat, Melaminpolyphosphat und/oder Borsäuresalze, insbesondere Melaminborat.

Als Kohlenstoff liefernde Verbindung enthält die erfindungsgemäße Additivmischung vorzugsweise eine Polyhydroxyverbindung, wie beispielsweise ein Kohlenhydrat, wie Zucker oder Stärke, Pentaerythrit, Dipentaerythrit, und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk.

Gemäß einer bevorzugten Ausführungsform der Erfindung ist das teilchenförmige Metall aus der Alumminium, Magnesium, Eisen und Zink umfassenden Gruppe ausgewählt und liegt vorzugsweise in Form eines Pulvers, von Plättchen, Schuppen, Fasern, Fäden und/oder Whiskers vor. Vorzugsweise weist das in Form eines Pulvers, von Plättchen oder Schuppen vorliegende teilchenförmige Metall eine Teilchengröße von ≤ 50 µm, vorzugsweise von 0,5 bis 10 µm auf. Wenn das teilchenförmige Metall in Form von Fasern, Fäden und/oder Whiskers vorliegt, besitzen diese Bestandteile vorzugsweise eine Dicke 0,5 bis 10 µm und eine Länge von 10 bis 50 µm.

Gemäß einer weiter bevorzugten Ausführungsform enthält die Additivmischung zusätzlich mindestens einen anorganischen Füllstoff, insbesondere ein Metalloxid, wie Eisenoxid, Titandioxid, Siliciumdioxid, Aluminiumoxid. Schwerspat, ein Borat, insbesondere Zinkborat, ein Carbonat, vorzugsweise Kreide, ein Silikat, vorzugsweise ein Alkalisilikat, Kaolin und/oder Glaspulver.

Eine weitere Ausführungsform der vorliegenden Erfindung betrifft einen Kunststoff-Formkörper mit erhöhter Formbeständigkeit im Brandfall, der dadurch gekennzeichnet ist, daß er 10 bis 60 Gew.-%, vorzugsweise 25 bis 40 Gew.-% der oben beschriebenen Additivmischung, bezogen auf das Gewicht des Kunststoff-Formkörpers, homogen in der Kunststoffmasse verteilt enthält. Dabei ist die Kunststoffmasse vorzugsweise aus einem üblichen duroplastischen oder thermoplastischen Harz und üblichen Hilfsstoffen gebildet. So kann die Kunststoffmasse aus einem Phenolharz, Harnstoffharz, Kautschuk, Polyurethan, Polyolefin, Polyvinylchlorid, Poly(meth)acrylat, Polyvinylacetat, Polyvinylalkohol, einem Silikonharz, Polybuten und/oder Polybutadien und üblichen Hilfsstoffen gebildet sein.

Die Kunststoffmasse kann vorzugsweise zusätzlich einen anorganischen Füllstoff in Form eines anorganischen Schaums, vorzugsweise geschäumten Blähton, Perlite und/oder Vermiculit, oder in Form von Hohlkügelchen aus silikatischem Material oder Glas enthalten.

Gemäß einer bevorzugten Ausführungsform der Erfindung enthält die Kunststoffmasse neben dem thermoplastischen Harz und der Additivmischung zusätzlich ein intumeszierendes Material, wie insbesondere Blähgraphit. Andererseits ist es möglich, der Kunststoffmasse zusätzlich einen Gasbildner für ein intumeszierendes Material, wie Chlorparaffin, Melamin, eine Melaminverbindung, insbesondere Melamincyanurat, Melaminphosphat, Melaminpolyphosphat, Tris(hydroxyethyl-)cyanurat. Dicyandiamid und/oder ein Guanidinsalz, inbesondere Guanidinphosphat oder Guanidinsulfat, zuzusetzen, welcher Gasbildner zusammen mit dem Säurebildner und der Kohlenstoff liefernden Verbindung ein intumeszierendes System bildet, das durch die erfindungsgemäße Anwendung des teilchenförmigen Metalls im Brandfall eine erhöhte Formbeständigkeit zeigt.

Es ist erforderlichenfalls möglich, der Kunststoffmasse eines Kunststoff-Formkörpers zusätzlich ein oder mehrere Flammschutzmittel zuzusetzen, wie halogenhaltige Flammschutzmittel, Metallhydroxide, insbesondere Alumminiumhydroxid oder Magnesiumhydroxid. Metalloxide, wie Titandioxid, roten Phosphor und/oder Phosphorverbindungen, insbesondere Trichlorethylphosphat, Tris(2-chlorisopropyl)-phosphat, Triphenylphosphat und Tris(2-chlorethyl)-phosphat, sowie gegebenenfalls Antimonoxid als Synergist.

Das duroplastische oder thermoplastische Harz des erfindungsgemäßen Kunststoff-Formkörpers kann in Form einer dichten Masse oder vorzugsweise in Form eines Schaums vorliegen. Bevorzugt sind Polyurethanschäume, die üblicherweise aus einem Polyisocyanat, einem Polyol und Wasser oder einem Treibmittel auf der Grundlage eines verflüssigten Harzes sowie gegebenenfalls üblichen Katalysatoren, Zusätzen, etc. hergestellt werden. Besonders bevorzugt ist es, den Kunststoff-Formkörper auf der Basis eines solchen Polyurethanschaums bei der Anwendung vor Ort zu bilden, insbesondere zur Verwendung als Bauschaum und insbesondere Brandschutzschaum zum Ausschäumen von Durchbrüchen in Wänden, Böden, Decken und zur Ausfüllung der verbliebenen Luftspalte in Rohrund/oder Kabeldurchführungen durch Mauern, Böden oder Decken.

Ein weiterer Gegenstand der Erfindung betrifft ein Zweikomponentensystem zur Herstellung dieses Kunststoff-Formkörpers vor Ort, welches dadurch gekennzeichnet ist, daß ein Packungsbehälter des Zweikomponentensystems mindestens ein Polyisocyanat und der andere Packungsbehälter mindestens ein Polyol, einen Katalysator für die Reaktion des Polyols mit dem Polyisocyanat, ein Treibmittel, eine aus Ammoniumpolyphosphat. Melamin und Pentaerythrit bestehende Intumeszenzmischung und 5 bis 15 Gew.-% der oben beschriebenen Additivmischung enthält, welche Bestandteile bei der Anwendung entweder unter Einwirkung eines in den Packungsbehältern enthaltenen Treibmittels oder unter Anwendung mechanischer Kräfte aus den Packungsbehältern ausgetrieben, vermischt und unter Bildung des Kunststoff-Formkörpers in der zu verschließenden Öffnung aufgeschäumt und verfestigt werden.

Mit Hilfe dieses Zwei-Komponentensystems wird es in einfacher Weise möglich, vor Ort eine Brandschutzabschottung mit erhöhter Formbeständigkeit im Brandfall zu erzeugen.

Die erfindungsgemäße Additivmischung kann überall dort eingesetzt werden, wo einerseits eine hohe Elastizität des Kunststoff-Formkörpers und andererseits eine besondere Feuerbeständigkeit gefordert ist. Beispielsweise können unter Anwendung der erfindungsgemäßen Additivmischung flexible Platten, Kabelumhüllungen mit Funktionserhalt auch im Brandfall, Schutzabschirmungen für Benzinschläuche, Schäume für Flugzeugsitze, Einlagen für Rohrschellen, Verglasungsprofile, Rohrdurchführungen (Kompensatoren) aber auch dauerelastische Beschichtungen und Dichtungsmassen gebildet werden, die sich durch eine besonders vorteilhafte Formbeständigkeit im Brandfall auszeichnen.

Die erfindungsgemäß erreichte Verbesserung der Formbeständigkeit im Brandfall wird dadurch erreicht, daß die der organischen Kunststoffmasse zugesetzte Additivmischung im Brandfall bei der Einwirkung hoher Temperaturen bei geringer Formänderung ein organisches, keramikartiges Material bildet, das sich über lange Zeit auch bei hohen Temperaturen von bis zu 1500°C nicht mehr verändert. Im Fall von intumeszierenden Materialien wird die bei im Brandfall entstehende Intumeszenzkruste zwar durch das Feuer permanent abgetragen und wieder neu gebildet, besitzt jedoch aufgrund der erfindungsgemäßen Additivmischung eine deutlich erhöhte Festigkeit.

Die folgenden Beispiele dienen der weiteren Erläuterung der Erfindung.

### Beispiel 1 Additivmischung

Man bereitet eine erfindungsgemäße Additivmischung durch Vermischen von 30 Gewichtsteilen Ammoniumpolyphosphat, 10 Gewichtsteilen Dipentaerythrit und 10 Gewichtsteilen Aluminiumpulver mit einer Teilchengröße von 5 µm.

### Beispiel 2 Platte aus elastischem Polyurethan

Kunststoffmasse für die Herstellung eines elastischen Polyurethan-Formkörpers

Man bereitet eine **Polyolkomponente** durch Vermischen der folgenden Bestandteile:
100 Gewichtsteile difunktionelles Polyetherpolyol (OH-Zahl ca. 28)
200 Gewichtsteile trifunktionelles Polyetherpolyol (OH-Zahl ca. 35)
1 Gewichtsteil Katalysator (DBTL, DABCO)
20 Gewichtsteile Pulverförmiges Molekularsieb (10 Å) (Trockenmittel
100 Gewichtsteile Additivmischung gemäß Beispiel 1

Als **Polyisocyanatkomponente** verwendet man
30 GT 4,4'-Methylendi(phenylisocyanat) mit einem NCO-Gehalt von 31%

Man bereitet eine homogene Mischung aus der Polyolkomponente und der Polyisocyanatkomponente und verformt die Mischung zu einer Platte, die nach dem Aushärten eine Shore A Härte von etwa 50 und eine Reißdehnung von > 500% aufweist.

### Beispiel 3 Platte aus Silikonelastomer

### Bestandteile für das Silikonelastomer

### Komponente A:

200 Gewichtsteile α, ω-Dihydroxypolydimethylsiloxan
20 Gewichtsteile SiH-funktionelles Silan (Vernetzer)
100 Gewichtsteile Additivmischung gemäß Beispiel 1

### Komponente B:

1 Gewichtsteil eines organischen Platinkomplexes als Katalysator
100 Gewichtsteile α, ω-Dihydroxypolydimethylsiloxan

Man vermischt die Komponente A mit der Komponente B und formt die Kunststoffmasse zu einer Platte. Nach einer Reaktionszeit von etwa 10 Minuten erhält man eine Silikonelastomerplatte mit einer Shore A Härte von etwa 30 und einer Reißdehnung von > 300%.

### Beispiel 4 Plastoelastische Acrylatdichtmasse

Für die Herstellung einer plastoelastischen Acrylatdichtmasse vermischt man die folgenden Bestandteile:
200 Gewichtsteile einer Styrol/Butylacrylat-Dispersion (Feststoffgehalt 60%)
200 Gewichtsteile Calciumcarbonat (Omya 5GU)
100 Gewichtsteile Additivmischung gemäß Beispiel 1

Diese plastoelastische Acrylatdichtmasse ergibt nach dem Auftrag auf eine zu schützende Unterlage und der Aushärtung eine Überzugsschicht mit einer Shore A-Härte von etwa 50 und einer Reißdehnung von etwa 100%.

### Beispiel 5 Polyurethanweichschaum

### Polyolkomponente

Durch Vermischen der folgenden Bestandteile bildet man eine **Polyolkomponente:**
100 Gewichtsteile difunktionelles Polyetherpolyol (OH-Zahl etwa 28)
200 Gewichtsteile trifunktionelles Polyetherpolyol (OH-Zahl etwa 35)
1 Gewichtsteil Katalysator (DBTL, DABCO)
3 Gewichtsteile Wasser
1 Gewichtsteil Schaumstabilisator
100 Gewichtsteile Additivmischung gemäß Beispiel 1.

Als **Polyisocyanatkomponente** verwendet man:
30 Gewichtsteile 4,4'-Methylendi(phenylisocyanat) mit einem NCO-Gehalt von 31%

Nach dem homogenen Vermischen der Polyolkomponente mit der Polyisocyanatkomponente bildet sich ein Polyurethanweichschaum.

### Beispiel 6 Festigkeitseigenschaften im Brandfall

Setzt man die Produkte der Beispiele 2 bis 5 einer Bunsenbrennerflamme mit einer Temperatur von 1200°C aus, so entsteht in allen Fällen eine harte, steinartige Masse mit den Abmessungen der ursprünglichen Produkte. Auch nach mehrstündiger Beflammung ändern diese Produkte ihre Dimensionen nicht mehr.

Wenn man die Produkte im Ofen langsam auf 1200°C erhitzt, setzen sie sich ebenfalls zu steinartigen Massen um, ohne ihre Dimensionen zu ändern.

## Patentansprüche

1. Additivmischung zur Erhöhung der Formbeständigkeit von Kunststoff-Formkörpern im Brandfall, **gekennzeichnet durch** einen Gehalt an 10 bis 90 Gew.-% eines Säurebildners ausgewählt aus der Ammoniumphosphat. Ammoniumpolyphosphat, Diaminphosphat, Phosphorsäureester mit einwertigen oder mehrwertigen Alkoholen, insbesondere Polyolen, wie Pentaerythrit, namentlich Pentaerythritphosphat, Trichlorethylphosphat, Tris(2-chlorisopropyl)-phosphat, Triphenylphosphat, Tris(2-chlorethyl)-phosphat, einen Phosphorsäure-Teilester oder -Mischester mit einwertigen und/oder mehrwertigen niedrigmolekularen Alkoholen, Melaminphosphaten, insbesondere Monomelaminorthophosphat, Dimelaminorthophosphat, Dimelaminpyrophosphat, Melaminpolyphosphat, Melaminborat und Borsäuresalze umfassenden Gruppe, 5 bis 45 Ges.-% einer Kohlenstoff liefernden Verbindung ausgewählt aus Kohlenhydraten, wie Zucker oder Stärke, Pentaerythrit, Dipentaerythrit, Phenolharzen, Harnstoffharzen. Polyurethanen, Poly(meth)acrylat, Polyvinylacetat, Polyvinylalkohol. Silikonharzen und Kautschuken und 5 bis 45 Gew.-% eines teilchenförmigen Metalls ausgewählt aus der Aluminium, Magnesium, Eisen und Zink umfassenden Gruppe, wobei das teilchenförmige Metall in Form eines Pulvers, von Plättchen und/oder Schuppen mit einer Teilchengröße von 0.5 bis 10 µm oder in Form von Fasern, Fäden und/oder Whiskers mit einer Dicke von 0.5 bis 10 µm und einer Länge von 10 bis 50 µm vorliegt.

2. Additivmischung nach Anspruch 1, **dadurch gekennzeichnet, daß** sie 40 bis 70 Gew.-% des Säurebildners, 15 bis 30 Gew.-% der Kohlenstoff liefernden Verbindung und 15 bis 30 Gew.-% des teilchenförmigen Metalls enthält.

3. Additivmischung nach mindestens einem der vorhergehenden Ansprüche, **dadurch gekennzeichnet, daß** sie zusätzlich mindestens einen anorganischen Füllstoff enthält.

4. Additivmischung nach Anspruch 3, **dadurch gekennzeichnet, daß** sie als anorganischen Füllstoff ein Metalloxid, insbesondere Eisenoxid, Titandioxid, Siliciumdioxid, Aluminiumoxid, Schwerspat, ein Borat, insbesondere Zinkborat, ein Carbonat, vorzugsweise Kreide, ein Silikat, vorzugsweise ein Alkalisilikat, Talkum, Glimmer oder Wollastonit, Kaolin und/oder Glaspulver enthält.

5. Verwendung der Additivmischung nach mindestens einem der vorhergehenden Ansprüche zur Erhöhung der Formbeständigkeit von Kunststoff-Formkörpern im Brandfall, wobei die Additivmischung in einer Menge von 10 bis 60 Gew.-%, vorzugsweise 25 bis 40 Ges.-%. bezogen auf das Gewicht des Kunststoff-Formkörpers, homogen in der Kunststoffmasse verteilt ist.

6. Verwendung nach Anspruch 5, **dadurch gekennzeichnet, daß** die Kunststoffmasse aus einem üblichen duroplastischen oder thermoplastischen Harz und üblichen Hilfsstoffen gebildet ist.

7. Verwendung nach Anspruch 6, **dadurch gekennzeichnet,** d aβ die Kunststoffmasse aus einem Phenolharz, Harnstoffharz, Kautschuk, Polyurethan, Polyolefin, Polyvinylchlorid, Poly(meth)acrylat, Polyvinylacetat, Polyvinylalkohol, einem Silikonharz, Polybuten und/oder Polybutadien und üblichen Hilfsstoffen gebildet ist.

8. Verwendung nach Anspruch 5 bis 7, **dadurch gekennzeichnet, daß** die Kunststoffmasse einen organischen Füllstoff in Form eines anorganischen Schaums, vorzugsweise geschäumtem Blähton, Perlit und/oder Vermiculit, oder in Form von Hohlkügelchen aus silikatischem Material oder Glas umfaßt.

9. Verwendung nach mindestens einem der Ansprüche 5 bis 8, **dadurch gekennzeichnet, daß** die Kunststoffmasse neben dem thermoplastischen Harz und der Additivmischung zusätzlich ein intumeszierendes Material enthält.

10. Verwendung nach Anspruch 9, **dadurch gekennzeichnet,**d aß die Kunststoffmasse als intumeszierendes Material Blähgraphit enthält.

11. Verwendung nach mindestens einem der Ansprüche 5 bis 8, **dadurch gekennzeichnet, daß** die Kunststoffmasse neben dem thermoplastischen Harz und der Additivmischung zusätzlich einen Gasbildner für ein intumeszierendes Material enthält.

12. Verwendung nach Anspruch 11, **dadurch gekennzeichnet, daß** die Additivmischung als Gasbildner Chlorparaffin, Melamin, eine Melaminverbindung, insbesondere Melamincyanurat, Melaminphosphat, Melaminpolyphosphat, Tris(hydroxyethyl)-cyanurat, Dicyandiamid und/oder ein Guanidinsalz, insbesondere Guanidinphosphat oder Guanidinsulfat, enthält.

13. Verwendung nach mindestens einem der vorhergehenden Ansprüche 5 bis 12, **dadurch gekennzeichnet, daß** die Kunststoffmasse zusätzlich ein oder mehrere Flammschutzmittel enthält.

14. Verwendung nach Anspruch 13, **dadurch gekennzeichnet, daß** die Kunststoffmasse als zusätzliches Flammschutzmittel ein halogenhaltiges Flammschutzmittel, Ammoniumphosphat, ein Metallhydroxid, insbesondere Aluminiumhydroxid oder Magnesiumhydroxid, ein Metalloxid, insbesondere Titanoxid, roten Phosphor und/oder eine Phosphorverbindung, insbesondere einen halogenierten Phosphorsäureester, wie Trichlorethylphosphat, Tris(2-chlorisopropyl)-phosphat. Triphenylphosphat und Tris(2-chlorethyl)-phosphat, sowie gegebenenfalls Antimonoxid als Synergist enthält.

15. Verwendung nach mindestens einem der vorhergehenden Ansprüche 6 bis 14, **dadurch gekennzeichnet, daß** das duroplastische oder thermoplastische Harz in Form eines Schaums vorliegt.

16. Verwendung nach Anspruch 15, **dadurch gekennzeichnet**, d aß das Harz einen aus einem Polyisocyanat, einem Polyol und Wasser oder einem Treibmittel auf der Grundlage eines verflüssigten Gases gebildeten Polyurethanschaum umfaßt.

17. Verwendung nach Anspruch 16, **dadurch gekennzeichnet, daß** der Polyurethanschaum bei der Anwendung vor Ort gebildet worden ist.

18. Verwendung nach den Ansprüchen 15 bis 17, zur Herstellung eines Kunststoff-Formkörpers mit erhöhter Formbeständigkeit im Brandfall vor Ort, **dadurch gekennzeichnet, daß** ein Packungsbehälter mindestens ein Polyisocyanat und der andere Packungsbehälter mindestens ein Polyol, einen Katalysator für die Reaktion des Polyols mit dem Polyisocyanat, ein Treibmittel, eine aus Ammoniumpolyphosphat, Melamin und Pentaerythrit bestehende Intumeszenzmischung und 5 bis 15 Gew.-% der Additivmischung nach mindestens einem der Ansprüche 1 bis 8 enthält, welche Bestandteile bei der Anwendung unter Einwirkung eines Treibmittels oder mechanischer Kräfte aus den Packungsbehältern ausgetrieben, vermischt und unter Bildung des Kunststoff-Formkörpers aufgeschäumt und verfestigt werden.

## Claims

1. An additive mixture for increasing the stability of shape of plastics mouldings in the event of fire, **characterised by** a content of 10 to 90 % by weight of an acid former selected from the group comprising ammonium phosphate, ammonium polyphosphate, diamine phosphate, esters of phosphoric acid with monohydric or polyhydric alcohols, particularly polyols, such as pentaerythritol, namely pentaerythritol phosphate, trichloroethyl phosphate, tris(2-chloroisopropyl) phosphate, triphenyl phosphate, tris(2-chloroethyl) phosphate, a partial ester or mixed ester of phosphoric acid with monohydric and/or polyhydric, low molecular weight alcohols, melamine phosphates, particularly monomelamine orthophosphate, dimelamine orthophosphate, dimelamine pyrophosphate, melamine polyphosphate, melamine borate and salts of boric acid, 5 to 45 % by weight of a carbon source compound selected from carbohydrates such as sugar or starch, pentaerythritol, dipentaerythritol, phenolic resins, urea resins, polyurethanes, poly(meth)acrylate, polyvinyl acetate, polyvinyl alcohol, silicone resins and rubbers, and 5 to 45 % by weight of a particulate metal selected from the group comprising aluminium, magnesium, iron and zinc, wherein the particulate metal is present in the form of a powder, lamellae and/or flakes with a particle size of 0.5 to 10 µm or in the form of fibres, filaments and/or whiskers with a thickness of 0.5 to 10 µm and a length of 10 to 50 µm.

2. An additive mixture according to claim 1, **characterised in that** it contains 40 to 70 % by weight of the acid former, 15 to 30 % by weight of the carbon source compound and 15 to 30 % by weight of the particulate metal.

3. An additive mixture according to at least one of the preceding claims, **characterised in that** it additionally contains at least one inorganic filler.

4. An additive mixture according to claim 3, **characterised in that** as an inorganic filler it contains a metal oxide, particularly iron oxide, titanium dioxide, silica, alumina, barytes, a borate, particularly zinc borate, a carbonate, preferably chalk, a silicate, preferably an alkali silicate, french chalk, mica or wollastonite, kaolin and/or glass powder.

5. A use of the additive mixture according to at least one of the preceding claims for increasing the stability of shape of plastics mouldings in the event of fire, wherein the additive mixture is homogeneously distributed in the plastics composition in an amount of 10 to 60 % by weight, preferably 25 to 40 % by weight, with respect to the weight of the plastics moulding.

6. A use according to claim 5, **characterised in that** the plastics composition is formed from a customary thermosetting or thermoplastic resin and customary adjuvants.

7. A use according to claim 6, **characterised in that** the plastics composition is formed from a phenolic resin, a urea resin, rubber, polyurethane, polyolefin, polyvinyl chloride, poly(meth)acrylate, polyvinyl acetate, polyvinyl alcohol, a silicone resin, polybutene and/or polybutadiene and customary adjuvants.

8. A use according to claims 5 to 7, **characterised in that** the plastics composition comprises an inorganic filler in the form of an inorganic foam, preferably foamed swelling clay, perlite and/or vermiculite, or in the form of hollow spheres of a silicate material or glass.

9. A use according to at least one of claims 5 to 8, **characterised in that** apart from the thermoplastic resin and the additive mixture the plastics composition additionally contains an intumescent material.

10. A use according to claim 9, **characterised in that** the plastics composition contains exfoliated graphite as an intumescent material.

11. A use according to at least one of claims 5 to 8, **characterised in that** the apart from the thermoplastic resin and the additive mixture the plastics composition additionally contains a gas former for an intumescent material.

12. A use according to claim 11, **characterised in that** as a gas former the additive mixture contains a chloroparaffin, melamine, a melamine compound, particularly melamine cyanurate, melamine phosphate or melamine polyphosphate, tris(hydroxyethyl) cyanurate, dicyandiamide and/or a guanidine salt, particularly guanidine phosphate or guanidine sulphate.

13. A use according to at least one of the preceding claims 5 to 12, **characterised in that** the plastics composition additionally contains one or more flame retardants.

14. A use according to claim 13, **characterised in that** as an additional flame retardant the plastics composition contains a halogen-containing flame retardant, ammonium phosphate, a metal hydroxide, particularly aluminium hydroxide or magnesium hydroxide, a metal oxide, particularly titanium dioxide, red phosphorus and/or a phosphorus compound, particularly a halogenated ester of phosphoric acid such as trichloroethyl phosphate, tris(2-chloroisopropyl) phosphate, triphenyl phosphate and tris(2-chloroethyl) phosphate, and optionally also contains antimony oxide as a synergist.

15. A use according to at least one of the preceding claims 6 to 14, **characterised in that** the thermosetting or thermoplastic resin is present in the form of a foam.

16. A use according to claim 15, **characterised in that** the resin comprises a polyurethane foam formed from a polyisocyanate, a polyol and water, or from a foaming agent based on a liquefied gas.

17. A use according to claim 16, **characterised in that** the polyurethane foam is formed on site.

18. A use according to claims 15 to 17 for the production on site of a plastics moulding with an increased stability of shape in the event of fire, **characterised in that** one package container contains at least one polyisocyanate and the other package container contains at least one polyol, a catalyst for the reaction of the polyol with the polyisocyanate, a foaming agent, an intumescent mixture consisting of ammonium polyphosphate, melamine and pentaerythritol, and 5 to 15 % by weight of the additive mixture according to at least one of claims 1 to 8, which constituents, when employed under the effect of a foaming agent or mechanical forces, are expelled from the package containers, mixed, and foamed and solidified with the formation of the plastics moulding.

## Revendications

1. Mélange d'additifs pour augmenter la stabilité dimensionnelle de pièces de forme en matière plastique en cas d'incendie, **caractérisé par** une teneur de 10 à 90 % en poids d'un générateur d'acide choisi parmi le phosphate d'ammonium, le polyphosphate d'ammonium, le phosphate de diamine, les esters d'acide phosphorique avec des alcools mono ou polyhydroxylés, en particuliers les polyols, comme le pentaérythritol, notamment le phosphate de pentaérythritol, le phosphate de trichloroéthyle, le tris(2-chloroisopropyl)-phosphate, le phosphate de triphényle, le tris(2-chloroéthyle)-phosphate, un ester partiel ou un ester mixte d'acide phosphorique avec des alcools monohydroxylés et/ou polyhydroxylés de bas poids moléculaire, les phosphates de mélamine, en particulier l'orthophosphate de monomélamine, l'orthophosphate de dimélamine, le pyrophosphate de dimélamine, le polyphosphate de mélamine, le borate de mélamine et le groupe comprenant les sels d'acide borique, 5 à 45 % en poids d'un composé délivrant un hydrocarbure choisi parmi les hydrates de carbone, comme le sucre ou l'amidon, le pentaérythritol, le dipentaérythritol, les résines phénoliques, les résines d'urée, les polyuréthanes, le poly(méth)acrylate, le polyacétate de vinyle, l'alcool polyvinylique, les résines silicone et les caoutchoucs et de 5 à 45 % en poids d'un métal particulaire choisi dans le groupe comprenant l'aluminium, le magnésium, le fer, et le zinc, le métal particulaire se présentant sous la forme d'une poudre, de paillettes et/ou de copeaux avec une taille de particules de 0,5 à 10 µm ou sous la forme de fibres, fils et/ou de whiskers avec une épaisseur de 0,5 à 10 µm et une longueur de 10 à 50 µm.

2. Mélange d'additifs selon la revendication 1, **caractérisé en ce qu'il** contient de 40 à 70 % en poids du générateur d'acide, de 15 à 30 % en poids du composé délivrant un hydrocarbure et de 15 à 30 % en poids du métal particulaire.

3. Mélange d'additifs selon au moins une des revendications précédentes, **caractérisé en ce qu'il** contient additionnellement au moins une charge inorganique.

4. Mélange d'additifs selon la revendication 3, **caractérisé en ce qu'**il contient comme charge inorganique un oxyde métallique, en particulier l'oxyde de fer, le dioxyde de titane, le dioxyde de silicium, l'oxyde d'aluminium, la barytine, un borate, en particulier le borate de zinc, un carbonate, de préférence la craie, un silicate, de préférence un silicate de métal alcalin, le talc, le mica ou la wollastonite, le kaolin et/ou de la poudre de verre.

5. Utilisation d'un mélange d'additifs selon au moins une des revendications précédentes pour augmenter la stabilité dimensionnelle de pièces de forme en matière plastique en cas d'incendie, le mélange d'additifs étant réparti de manière homogène dans la matière synthétique en une quantité de 10 à 60 % en poids, de préférence de 25 à 40 % en poids, par rapport au poids de la pièce de forme en matière plastique.

6. Utilisation selon la revendication 5, **caractérisée en ce que** la matière plastique est formée d'une résine thermodurcissable ou thermoplastique usuelle et d'additifs usuels.

7. Utilisation selon la revendication 6, **caractérisée en ce que** la matière plastique est formée d'une résine phénolique, d'une résine urée, d'un caoutchouc, d'un polyuréthane, d'une polyoléfine, de polychlorure de vinyle, de poly(méth)acrylate, de polyacétate de vinyle, d'alcool polyvinylique, d'une résine silicone, de polybutène et/ou de polybutadiène et d'adjuvants usuels.

8. Utilisation selon les revendications 5 à 7, **caractérisée en ce que** la matière plastique comprend une charge organique sous la forme d'une mousse inorganique, de préférence de la mousse d'argile expansée, de la perlite et/ou de la vermiculite, ou sous la forme de petites billes creuses en matière silicatée ou de verre.

9. Utilisation selon au moins une des revendications 5 à 8, **caractérisée en ce que** la matière plastique contient en plus de la résine thermoplastique et du mélange d'additifs un matériau intumescent additionnel.

10. Utilisation selon la revendication 9, **caractérisée en ce que** la matière plastique contient comme matériau intumescent du graphite expansé.

11. Utilisation selon au moins une des revendications 5 à 8, **caractérisée en ce que** la matière plastique contient en plus de la résine thermoplastique et du mélange d'additifs un générateur de gaz additionnel pour un matériau intumescent.

12. Utilisation selon la revendication 11, **caractérisée en ce que** le mélange d'additifs contient comme générateur de gaz la chloroparaffine, la mélamine, un composé de mélamine, en particulier le cyanurate de mélamine, le phosphate de mélamine, le polyphosphate de mélamine, le tris(hydroxyéthyle)-cyanurate, le dicyandiamide et/ou un sel de guanidine, en particulier le diphosphate de guanidine ou le sulfate de guanidine.

13. Utilisation selon au moins une des revendications précédentes 5 à 12, **caractérisée en ce que** la matière plastique contient en plus un ou plusieurs agents ignifugeants.

14. Utilisation selon la revendication 13, **caractérisée en ce que** la matière plastique contient comme agent ignifugeant additionnel un agent ignifugeant halogéné, du phosphate d'ammonium, un hydroxyde métallique, en particulier l'hydroxyde d'aluminium ou l'hydroxyde de magnésium, un oxyde métallique, en particulier l'oxyde de titane, le phosphore rouge et/ou un composé de phosphore, en particulier un ester d'acide phosphorique halogéné, comme le phosphate de trichloroéthyle, le tris(2-chloroisopropyle)-phosphate, le phosphate de triphényle et le tris(2-chloroéthyle)-phosphate, ainsi qu'éventuellement l'oxyde d'antimoine comme agent de synergie.

15. Utilisation selon au moins une des revendications précédentes 6 à 14, **caractérisée en ce que** la résine duroplastique ou thermoplastique se présente sous la forme d'une mousse.

16. Utilisation selon la revendication 15, **caractérisée en ce que** la résine comprend une mousse de polyuréthane formée à partir d'un polyisocyanate, d'un polyol et d'eau ou d'un agent moussant à base d'un gaz liquéfié.

17. Utilisation selon la revendication 16, **caractérisée en ce que** la mousse de polyuréthane est formée sur place au moment de l'utilisation.

18. Utilisation selon les revendications 15 à 17, pour la préparation d'un pièce moulée en matière plastique avec une stabilité dimensionnelle plus élevée en cas d'incendie, **caractérisée en ce qu'**un récipient de conditionnement contient au moins un polyisocyanate et l'autre récipient de conditionnement au moins un polyol, un catalyseur pour la réaction du polyol avec le polyisocyanate, un agent moussant, un mélange d'intumescence contenant du polyphosphate d'ammonium, de la mélamine et du pentaérythritol et de 5 à 15% en poids du mélange d'additifs selon au moins une des revendications 1 à 8, les constituants étant expulsés des récipients de conditionnement au moment de l'utilisation sous l'action d'un agent moussant ou de forces mécaniques, mélangés et moussés en formant le corps moulé en matière plastique et solidifiés.
